# EUROPÄISCHE PATENTSCHRIFT

(11) **EP 3 605 771 B1**
(45) Veröffentlichungstag und Bekanntmachung des Hinweises auf die Patenterteilung: **15.07.2020**
(21) Anmeldenummer: 18187213.6
(22) Anmeldetag: 03.08.2018
(51) Int. Cl.: H02J 1/10, B63J 3/04, H02J 7/14, H02J 7/34

(54) **REDUNDANTES ENERGIEVERSORGUNGSNETZ UND SCHIFF MIT REDUNDANTEM ENERGIEVERSORGUNGSNETZ ALS BORDNETZ**
REDUNDANT ENERGY SUPPLY SYSTEM AND SHIP WITH REDUNDANT ENERGY SUPPLY NETWORK AS ON-BOARD POWER SYSTEM
RÉSEAU D'ALIMENTATION EN ÉNERGIE REDONDANT ET NAVIRE DOTÉ DU RÉSEAU D'ALIMENTATION EN ÉNERGIE REDONDANT EN TANT QUE RÉSEAU DE BORD

(43) Veröffentlichungstag der Anmeldung: 05.02.2020
(73) Patentinhaber: Siemens Aktiengesellschaft, 80333 München (DE)
(72) Erfinder: Gritsch, Christian, 90491 Nürnberg (DE)

(56) Entgegenhaltungen:
- WO-A1-01/11765
- DE-A1-102012 203 820
- US-A- 5 844 329
- US-B1- 9 362 838

## Beschreibung

Die Erfindung betrifft ein redundantes Energieversorgungsnetz aufweisend einen ersten Einspeisestromrichter mit einem ersten Gleichspannungszwischenkreis und einen zweiten Einspeisestromrichter mit einem zweiten Gleichspannungszwischenkreis, sowie eine erste Energiequelle und eine zweite Energiequelle, ein Wechselspannungsnetz und einen Anschluss für ein externes Netz, wobei der erste und der zweite Einspeisestromrichter jeweils wechselspannungsseitig mit dem Wechselspannungsnetz verbunden sind, wobei die erste Energiequelle mit dem ersten Gleichspannungszwischenkreis verbunden ist und die zweite Energiequelle mit dem zweiten Gleichspannungszwischenkreis verbunden ist. Die Erfindung betrifft ferner ein Schiff mit einem Bordnetz, wobei das Bordnetz als ein derartiges redundantes Energieversorgungsnetz ausgebildet ist. Ferner betrifft die Erfindung ein Verfahren zum Verbinden eines derartigen redundanten Energieversorgungsnetzes mit einem externen Netz.

Energieversorgungsnetze dienen der Versorgung von elektrischen Verbrauchern mit Energie. Für wichtige Verbraucher ist ein solches Energieversorgungsnetz oft redundant ausgelegt. Das bedeutet, dass auch bei Ausfall einer oder mehrerer Komponenten das Energieversorgungsnetz noch zuverlässig elektrische Energie zur Verfügung stellen kann. Dies ist beispielsweise für elektrische Verbraucher auf Fahrzeugen, insbesondere für Wasserfahrzeuge wie Schiffen, der Fall. Dort ist insbesondere während der Fahrt des Schiffes erforderlich, dass kritische elektrische Verbraucher aus einem redundanten Energieversorgungsnetz versorgt werden.

Die Verbraucher werden über ein Wechselspannungsnetz mit elektrischer Energie versorgt. Gespeist wird das redundante Energieversorgungsnetz aus zwei Energiequellen. Bei den Energiequellen kann es sich um reine Energieerzeuger handeln, wie beispielsweise Generatoren, die an einer Verbrennungsmaschine betrieben werden oder um Energiespeicher, wie beispielsweise Batterien. Diese Energiespeicher können nicht nur elektrische Energie zur Verfügung stellen sondern auch Energie aufnehmen und speichern. Auf einem Schiff ist es auch möglich, Wellengeneratoren als Energiequellen zu verwenden. Dabei wird mechanische Energie aus der Antriebswelle, der Schiffswelle, des Schiffes durch einen Generator entnommen und dem Energieversorgungsnetz zugeführt. Die Energiequelle umfasst dabei häufig einen Stromrichter, damit die Energiequelle an einen Gleichspannungszwischenkreis eines Einspeisestromrichters angeschlossen werden kann.

Der Einspeisestromrichter ist zwischen Energiequelle und Wechselspannungsnetz angeordnet. Mit diesem ist es möglich, den Energieaustausch zwischen Energiequelle und Wechselspannungsnetz zu steuern oder zu regeln. Diese halten die Anforderungen bezüglich Netzstörungen im Wechselspannungsnetz ein und sind in der Lage, das Wechselspannungsnetz durch Spannung und Frequenz zu bilden.

Daneben kann es erforderlich sein, das Wechselspannungsnetz anstelle durch die Energiequellen, mit einem externen Netz zu verbinden und von diesem aus mit elektrischer Energie zu versorgen. Dies kann beispielsweise zu Wartungszwecken erforderlich werden. Bei Fahrzeugen kann dies erforderlich sein, wenn diese Fahrzeuge in einem Depot stehen, wo der Betrieb eines Dieselmotors nicht erlaubt ist. Das gleiche gilt für Schiffe, in denen der Betrieb eines Dieselmotors aus Umweltschutzgründen in bestimmten Bereichen untersagt ist und das Wechselspannungsnetz dann durch ein externes Netz, auch als Landeinspeisung, Landanschluss oder Landnetz bekannt, mit elektrischer Energie versorgt werden sollte. Dazu wird dann ein weiterer Stromrichter vorgesehen, der den Energieaustausch zwischen externem Netz und Wechselspannungsnetz steuert oder regelt. Stand der Technik findet sich in DE 10 2012 203 820 A1, US 9 362 838 B1, WO 01/11765 A1 bzw. US 5 844 329.

Der Erfindung liegt die Aufgabe zugrunde, ein redundantes Energieversorgungsnetz im Hinblick auf die Einspeisung durch ein externes Netz zu verbessern.

Die Aufgabe wird durch ein redundantes Energieversorgungsnetz aufweisend einen ersten Einspeisestromrichter mit einem ersten Gleichspannungszwischenkreis und einen zweiten Einspeisestromrichter mit einem zweiten Gleichspannungszwischenkreis, sowie eine erste Energiequelle und eine zweite Energiequelle, ein Wechselspannungsnetz und einen Anschluss für ein externes Netz gelöst, wobei der erste und der zweite Einspeisestromrichter jeweils wechselspannungsseitig mit dem Wechselspannungsnetz verbunden sind, wobei die erste Energiequelle mit dem ersten Gleichspannungszwischenkreis verbunden ist und die zweite Energiequelle mit dem zweiten Gleichspannungszwischenkreis verbunden ist, wobei zwischen dem ersten Einspeisestromrichter und dem Wechselspannungsnetz ein erster Netzschalter angeordnet ist, wobei der erste Gleichspannungszwischenkreis und der zweite Gleichspannungszwischenkreis mittels eines Zwischenkreisschalters miteinander verbindbar sind, wobei zwischen dem ersten Einspeisestromrichter und dem ersten Netzschalter eine Verbindung zu einem Anschluss für ein externes Netz angeordnet ist. Ferner wird die Aufgabe durch ein Wasserfahrzeug mit einem Bordnetz gelöst, wobei das Bordnetz als derartiges, redundantes Energieversorgungsnetz ausgebildet ist. Weiter wird die Aufgabe durch Verfahren zum Verbinden eines derartigen redundanten Energieversorgungsnetzes mit einem externen Netz gelöst, wobei der Zwischenkreisschalter geschlossen und der erste Netzschalter geöffnet wird, wobei nach dem Öffnen des ersten Netzschalters das externe Netz mit dem ersten Einspeisestromrichter elektrisch leitend verbunden wird.

Weitere vorteilhafte Ausgestaltungen der Erfindung sind in den abhängigen Ansprüchen angegeben.

Der Erfindung liegt die Erkenntnis zugrunde, dass sich durch Nutzung des ersten Einspeisestromrichters für die Verbindung mit dem externen Netz auf einfache Weise ohne zusätzlichen Stromrichter die Versorgung aus dem externen Netz sicherstellen lässt. Dazu muss lediglich zwischen dem Wechselspannungsnetz und dem ersten Einspeisestromrichter ein Schalter vorhanden sein, der den ersten Einspeisestromrichter vom Wechselspannungsnetz trennt. Um diesen Schalter von anderen Schaltern unterscheiden zu können, wird er als Netzschalter bezeichnet. Über die Verbindung zu einem Anschluss für ein externes Netz kann nach dem Öffnen des ersten Netzschalters eine elektrisch leitende Verbindung zwischen dem ersten Einspeisestromrichter und dem externen Netz hergestellt werden. Dies kann beispielsweise dadurch gestehen, dass das externe Netz beispielsweise über ein Kabel und dazugehörigem Stecker mit dem Anschluss verbunden wird. Ebenso ist es möglich, die Verbindung vom Netz zum Anschluss auch schon vor dem Öffnen des ersten Netzschalters herzustellen und nach dem Öffnen des ersten Netzschalters einen in der Verbindung zum Anschluss befindlichen Schalter zu schließen und damit die elektrisch leitende Verbindung herzustellen. Damit ein Energieaustausch zwischen dem externen Netz und dem Wechselspannungsnetz zustande kommen kann, müssen die Gleichspannungszwischenkreise des ersten und des zweiten Einspeisestromrichters miteinander verbunden werden. Dies kann in vorteilhafter Weise mit einem Schalter geschehen. Um diesen von den anderen Schaltern unterscheiden zu können, wird er als Zwischenkreisschalter bezeichnet.

Das Wechselspannungsnetz kann als einphasiges oder mehrphasiges Netz ausgebildet sein. Insbesondere ein dreiphasiges Drehstromnetz hat sich für die Versorgung von elektrischen Verbrauchern als sinnvoll erwiesen und am Markt durchgesetzt.

Als besonderen Vorteil ist zu nennen, dass dieser Prozess des Zuschaltens des externen Netzes unterbrechungsfrei erfolgt, d.h. das Bordnetz wird kontinuierlich versorgt. Dabei können bei der Versorgung aus einem externen Netz auch immer noch die Energiequellen, sowohl als Motoren als auch als Generatoren kontinuierlich betrieben werden.

Ein Synchronisieren der Spannung und Frequenz vom ersten Einspeisestromrichter auf die Spannung und Frequenz des externen Netzes kann sowohl vor dem Herstellen der elektrischen Verbindung mit dem externen Netz oder nach dem Herstellen der elektrischen Verbindung geschehen. Erfolgt die Synchronisation nach dem Herstellen der elektrischen Verbindung mit dem externen Netz, so sollte der erste Einspeisestromrichter beim Verbinden mit dem externen Netz gesperrt sein, um ungewünschte Ausgleichsvorgänge zwischen den Komponenten des redundantem Energieversorgungsnetzes und dem externen Netz zu vermeiden..

Das Nutzen des ersten Einspeisestromrichters für die Einspeisung durch das externe Netz kann auch als Umgruppierung bezeichnet werden. Das heißt, durch die Umgruppierung der Stromrichter mit Verbindung der Zwischenkreise können die vorhandenen Einspeisestromrichter zu Netzkopplungsumrichtern umfunktioniert werden und ermöglichen damit eine Versorgung durch ein externes Netz, insbesondere eines Landanschlusses, ohne zusätzliche Umrichterhardware. Es ist dazu nur eine schaltbare Verbindung zwischen den Gleichspannungszwischenkreisen der Einspeisestromrichter erforderlich und ein Schalter zum Trennen des ersten Einspeisestromrichters vom Wechselspannungsnetz.

Durch das Umgruppieren geht zwar die Redundanz in der Energieversorgung, was die Stromrichter betrifft, verloren, andererseits ist durch das externe Netz bereits eine hohe Zuverlässigkeit in der Energieversorgung gegeben.

Besonders vorteilhaft ist der Einsatz des redundanten Energieversorgungsnetzes auf einem Wasserfahrzeug wie beispielsweise einem Schiff. Da ein Schiff aus Redundanzgründen meistens zweikanalig aufgebaut ist, um eine sichere Energieversorgung zu gewährleisten, sind dazu häufig ein Backbordstromrichter und ein Steuerbordstromrichter vorhanden. Diese Zweikanaligkeit sichert während der Fahrt des Schiffes, d.h. während dem Betrieb des Schiffes, eine zuverlässige Energieversorgung. Allerdings ist in einem Hafen die Zweikanaligkeit nicht zwingend erforderlich. Das heißt, im Hafen kann auf eine redundante Einspeisung in das Wechselspannungsnetz verzichtet werden. Redundanz bezüglich der Quellen ist noch vorhanden. Somit ist das redundante Energieversorgungsnetz im besonderen Maße für ein Schiff geeignet, da es im Betrieb, beispielsweise auf See eine Redundanz sicherstellt und gleichzeitig durch die Nutzung der Einspeisestromrichter eine Einspeisung aus einem externen Netz ohne weitere Stromrichter ermöglicht, und dabei auf eine Redundanz verzichtet, wo sie nicht erforderlich ist. Mit anderen Worten wird der durch den Verlust der Redundanz in der Einspeisung gewonnene Freiheitsgerad für die Umgruppierung der Stromrichter genutzt, indem der erste Gleichspannungszwischenkreis und der zweite Gleichspannungszwischenkreis mittels Zwischenkreisspannungsschalter miteinander verbunden werden. Der Zwischenkreisspannungsschalter kann beispielsweise als Schütz oder Trenner ausgeführt sein. Aus diesen Gründen ist das redundante Energieversorgungsnetz im besonderen Maße zur Bildung des Bordnetzes eines Schiffes geeignet.

Die sich bei der Versorgung über das externe Netz ergebene geringere Einspeiseleistung in das Wechselspannungsnetz, da nur ein Einspeisestromrichter in das Wechselspannungsnetz einspeist, ist nicht von großer Bedeutung, da im Hafen die benötigte Leistung im Bordnetz reduziert ist.

Durch das Umgruppieren der Einspeisestromrichter können auch vorhandene Netzfilter dieser Stromrichter verwendet werden. Auf weitere Netzfilter, wie sie beispielsweise bei der Verwendung weiterer Stromrichter erforderlich wären, kann verzichtet werden und damit Kosten, Gewicht und Bauraum des Energieversorgungsnetzes eingespart werden.

Des Weiteren kann die redundante Energieversorgung bei Inselnetzen in vorteilhafter Weise zur Anwendung kommen. Generell kann man bei Vorhandensein von zwei Einspeisestromrichtern durch Umgruppierung eine Netzkopplung vornehmen. Damit kann man beispielsweise Inselnetze, wenn sie einen Energieüberschuss haben, mit dem Verbundnetz als externes Netz verbinden. Durch den Energieüberschuss ist eine Redundanz in der Energieerzeugung nicht mehr unbedingt erforderlich. Ebenso ist es möglich, bei sich abzeichnender Erschöpfung der Energiequelle oder der Energiequellen, mit der Verbindung zu einem externen Netz eine zuverlässige Energieversorgung zu gewährleisten.

Bei einer vorteilhaften Ausgestaltung der Erfindung sind die erste Energiequelle und die zweite Energiequelle als Wellengenerator ausgebildet. Bei der Ausbildung des Bordnetz eines Schiffes als redundantes Energieversorgungsnetz ergeben sich unter anderem folgende vorteilhafte Anwendungsmöglichkeiten.

In einem ersten Szenario erreicht das Schiff einen Hafen und legt an, die Hauptantriebe des Wellengenerators sind dabei noch eingeschaltet. Es wird zuerst der erste Einspeisestromrichter vom Schiffsnetz, dem Wechselspannungsnetz getrennt. Der zweite Einspeisestromrichter versorgt kontinuierlich das Wechselspannungsnetz aus der zweiten Energiequelle, einem der Wellengeneratoren. Dann wird, in beliebiger Reihenfolge, der Zwischenkreisschalter geschlossen der erste Einspeisestromrichter auf das Landnetz als externes synchronisiert und die Verbindung zum Landnetz hergestellt. Dies kann durch das Herstellen einer Verbindung, beispielsweise durch Stecken eines Kabels oder durch Schließen eines Verbindungsschalters geschehen. Dabei können die Wellengeneratoren auch nach der Verbindung mit dem externen Netz im Betrieb bleiben, beispielsweise um die Positionierung des Schiffes zu unterstützen.

Als zweites Szenario ist folgende Anwendung möglich. Vor Erreichen des Hafens wird der Hauptantrieb, der oftmals eine wenig umweltfreundliche Verbrennungsmaschine umfasst, abgeschaltet und kleinere, saubere Dieselmotoren eingeschaltet. Nun wird der Wellengenerator motorisch zum Antrieb des Schiffes genutzt. Damit stellt die Energiequelle temporär eine Energiesenke dar und der Wellengenerator ist zum Antrieb geworden. Der Leistungsfluss geht nun vom Wechselspannungsnetz zum Wellengenerator, der nun motorisch betrieben wird. Erreicht das Schiff den Liegeplatz, können die motorisch laufenden Wellengeneratoren abgeschaltet und einer der erste Einspeisestromrichter vom Bordnetz getrennt und es erfolgt der Verbindungsaufbau zum Landnetz, wie unter dem ersten Scenario beschrieben. Vorteilhafterweise ist es auch hier möglich, die Wellengeneratoren im Betrieb zu lassen um damit die Positionierung des Schiffes zu unterstützen. Damit kann ein besonders umweltfreundlicher Betrieb in der Nähe des Hafens erzielt werden. Auch das Einhalten strenger Emissionsvorschriften, gerade innerhalb von Hoheitsgebieten oder in Hafennähe, ist durch das redundante Energieversorgungsnetz auf einfache Weise möglich.

Bei einer weiteren vorteilhaften Ausgestaltung der Erfindung ist die erste Energiequelle und/oder die zweite Energiequelle als Energiespeicher, insbesondere als Batterie, ausgebildet. Wie oben beschreiben wird wieder der erste Einspeisestromrichter vom Bordnetz, bzw. allgemein vom Wechselspannungsnetz, getrennt. Der erste Einspeisestromrichter wird wechselspannungsseitig über die Verbindung zu einem Anschluss für ein externes Netz mit dem externen Netz, beispielsweise dem Landnetz verbunden. Der erste Einspeisestromrichter wird analog zu den beschriebenen Verfahren mit dem Landnetz bzw. dem externen Netz synchronisiert. Nun kann durch das Landnetz nicht nur die Batterie geladen werden, sondern gleichzeitig auch mit dem an Bordnetz verbleibenden zweiten Einspeisestromrichter eine Spannung für das Wechselspannungsnetz erzeugt und aufrecht erhalten werden. Im Besonderen eignet sich diese Ausführungsform für ein Schiff, das elektrisch betrieben wird. Bei den Energiespeichern kann es sich um Speicher handeln, die ausschließlich oder teilweise für die Versorgung der elektrischen Antriebsmotoren vorgesehen sind.

Bei einer weiteren vorteilhaften Ausgestaltung der Erfindung weist die Verbindung zu dem Anschluss des externen Netzes einen Verbindungsschalter aufweist. Der Verbindungsschalter ist, wie oben beschreiben, nicht zwingend erforderlich. Allerdings kann durch den Verbindungsschalter das Zuschalten des externen Netzes von einer Regelung gesteuert werden. Somit kann das Zuschalten in Abhängigkeit mit der Synchronisation des Einspeisestromrichters mit dem externen Netz erfolgen. Durch Rückmeldekontakte des Schalters ist der Regelung bekannt, ob das externe Netz mit dem ersten Einspeisestromrichter verbunden ist oder nicht. Damit ist das Verfahren des Zuschaltens des externen Netzes auf einfache Weise, beispielsweise durch eine Regelung eines Einspeisestromrichters oder beider Einspeisestromrichter, automatisierbar.

Im Folgenden wird die Erfindung anhand der in den Figuren gezeigten Ausführungsbeispiele näher beschrieben und erläutert. Es zeigen:
- FIG 1: ein bekanntes Energieversorgungsnetz,
- FIG 2: ein Ausführungsbeispiel für ein redundantes Energieversorgungsnetz mit einem Anschluss für ein externes Netz,
- FIG 3 bis FIG 5: Ausgestaltungen der Energiequelle und
- FIG 6: ein Schiff mit einem redundanten Energieversorgungsnetz mit einem Anschluss für ein externes Netz.

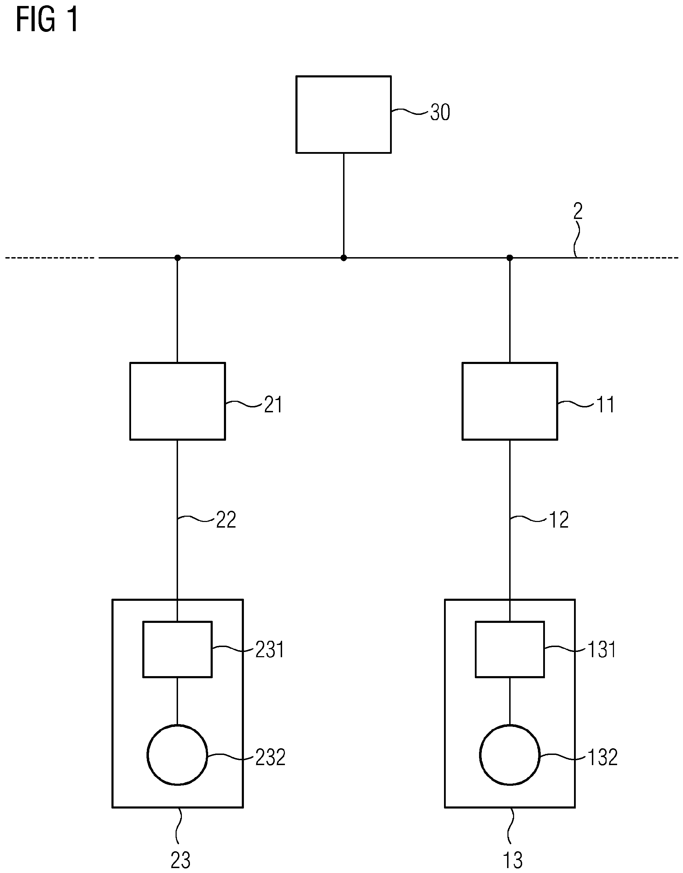

Die FIG 1 zeigt ein bekanntes Energieversorgungsnetz, bei dem ein Wechselspannungsnetz 2 zur Versorgung von nicht dargestellten elektrischen Verbrauchern aus einer ersten Energiequelle 13 und einer zweiten Energiequelle 23 mit elektrischer Energie versorgt wird. Die Energieversorgung erfolgt in diesem Beispiel über zwei Stränge, die jeweils einen Einspeisestromrichter 11, 21, einen Gleichspannungszwischenkreis 12, 22 und die Energiequelle 13, 23 aufweisen. Die Energiequellen 13, 23 sind jeweils an dem ersten bzw. zweiten Gleichspannungszwischenkreis 12, 22 des jeweiligen Einspeisestromrichters 11, 21 angeschlossen. Die jeweiligen Energiequellen 13, 23 weisen neben einer elektrischen Maschine 132, 232 einen Steller 131, 231 auf. Dieser Steller 131, 231 ist in der Lage, eine von der elektrischen Maschine bereitgestellte Wechselspannung in eine Gleichspannung zu wandeln, damit die Energiequelle 13, 23 mit dem jeweiligen Gleichspannungszwischenkreis 12, 22 verbunden werden kann. Die Bildung des Wechselspannungsnetzes kann durch einen oder mehrere Einspeisestromrichter 11, 12 vorgenommen werden. In diesem Beispiel sind ein erster Einspeisestromrichter 11 und ein zweiter Einspeisestromrichter 21 dargestellt, die einen Energieaustausch zwischen der daran angeschlossenen Energiequelle 13, 23 und dem Wechselspannungsnetz 2 steuern oder regeln können. Die Anordnung der zwei Stränge schafft eine Redundanz, die es auch bei Ausfall einer Komponente eines Stranges erlaubt, das Wechselspannungsnetz 2 noch zuverlässig über den anderen Strang mit Energie zu versorgen.

Neben der Energieversorgung aus den zwei Energiequellen 13, 23 kann das Wechselspannungsnetz 2 auch zusätzlich oder alternativ noch aus einem Dieselgenerator 30 gespeist werden.

Will man ein solches Energieversorgungsnetz mit einem hier nicht dargestellten externen Netz 5 verbinden, so wird an einem der Gleichspannungszwischenkreise 12, 22 ein weiterer, hier nicht dargestellter Stromrichter angeordnet, der das externe Netz 5 mit dem Gleichspannungszwischenkreis 12, 22 verbindet. Um den Stromrichter einzusparen, kann das externe Netz 5 auch zwischen Steller 131, 231 und elektrischer Maschine 132, 232 mit dem Energieversorgungsnetz verbunden werden. Dann kann der jeweilige Steller 131 bzw. 231 die Aufgabe übernehmen, das externe Netz 5 mit dem Gleichspannungszwischenkreis 12, 22 zu verbinden und darüber Energie in das Wechselspannungsnetz 2 einzuspeisen. Die elektrische Maschine 132, 232 dieses Stranges muss dann beispielsweise mittels eines Schalters vom Energieversorgungsnetz getrennt sein.

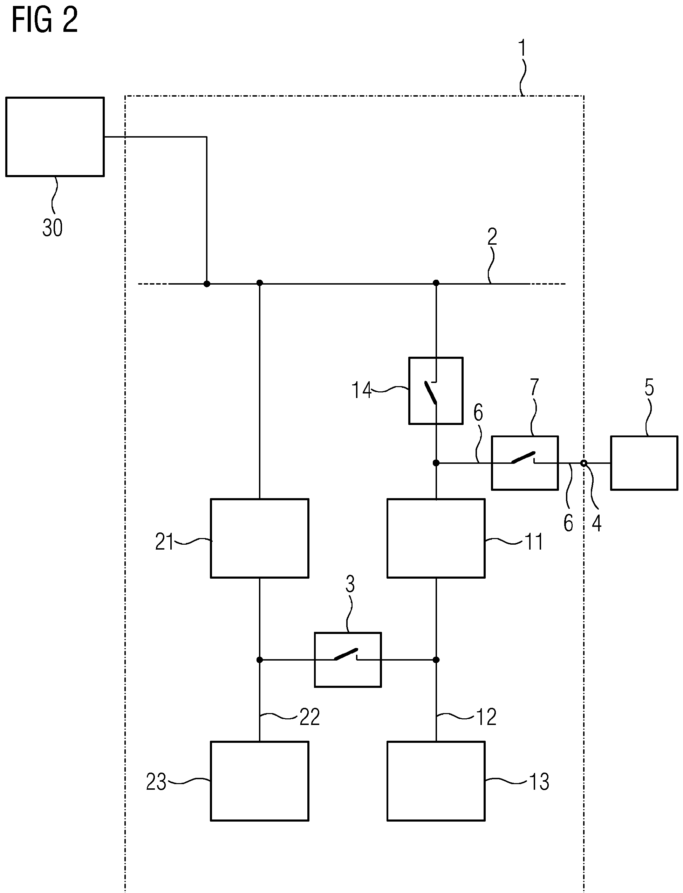

Die FIG 2 zeigt ein redundantes Energieversorgungsnetz 1 mit einem Anschluss 4 für ein externes Netz 5. Zur Vermeidung von Wiederholungen wird auf die Beschreibung zur FIG 1 sowie auf die dort eingeführten Bezugszeichen verwiesen. Im Vergleich zum Energieversorgungsnetz der FIG 1 weist das redundante Energieversorgungsnetz 1 mit einem Anschluss 4 für ein externes Netz 5 einen ersten Netzschalter 14 auf, der zwischen Wechselspannungsnetz 2 und erstem Einspeisestromrichter 11 angeordnet ist. Mit diesem Netzschalter 14 und einem Verbindungsschalter 7, der zwischen dem Anschluss 4 für das externe Netz 5 und einer Verbindung zwischen erstem Netzschalter 14 und erstem Einspeisestromrichter 11 angeordnet ist, lässt sich das redundante Energieversorgungsnetz 1 derart umgruppieren, dass Energie aus dem externen Netz 5 über den ersten Einspeisestromrichter 11 und den zweiten Einspeisestromrichter 21 in das Wechselspannungsnetz 2 eingespeist werden kann. Der erste Einspeisestromrichter 11 und der zweite Einspeisestromrichter 21 bilden gemeinsam einen Netzkopplungsumrichter. Damit der Energieaustausch zwischen Wechselspannungsnetz 2 und dem externen Netz 5 stattfinden kann, müssen im Gegensatz zu der Anordnung der FIG 1 der erste Gleichspannungszwischenkreis 12 und der zweite Gleichspannungszwischenkreis miteinander verbunden sein. Dazu ist in dem Ausführungsbeispiel zwischen dem ersten Gleichspannungszwischenkreis und dem zweiten Gleichspannungszwischenkreis ein Zwischenkreisschalter 3 angeordnet. In einer redundanten Energieversorgung des Wechselspannungsnetzes 2 aus den Energiequellen 13, 23 ist der Verbindungsschalter 7 geöffnet. Der Zwischenkreisschalter 3 ist vorzugsweise aber nicht notwendigerweise geöffnet, damit die Energieversorgung redundant aus den Energiequellen erfolgt und sich ein Fehler in einem Strang nicht auf den anderen Strang auswirkt. Für die Zuschaltung des externen Netzes 5 wird das externe Netz 5 mit dem Anschluss 4 verbunden, der Zwischenkreisschalter 3 geschlossen und der Netzschalter 14 geöffnet. Falls die erste Energiequelle 13 im Betrieb bleiben soll, muss der Zwischenkreisschalter 3 geschlossen werden bevor der erste Netzschalter 14 geöffnet wird, damit die Energie der ersten Energiequelle 13 abgenommen werden kann. Nach dem Öffnen des ersten Netzschalters 14 kann der Verbindungsschalter 7 geschlossen werden und das externe Netz 5 ist damit mit dem Wechselspannungsnetz 2 verbunden. Zu beachten ist, dass dieses Zuschalten unterbrechungsfrei geschieht. Keine der Energiequellen 13, 23 muss für dieses Zuschalten abgeschaltet werden.

Besonders vorteilhaft ist diese Anordnung für ein Schiff, dass in einem Hafen oder in dessen Nähe mit einem umweltfreundlichen Dieselgenerator 30 betrieben wird. Der Antriebsdiesel 31, hier nicht dargestellt, zum Antreiben der Schiffsschraube kann abgestellt werden, da in der Nähe des Hafens oder im Hafen nur eine geringere Antriebsleitung benötigt wird. Oftmals ist gerade dieser Antriebsdiesel 31 weitaus weniger umweltfreundlich. Die Energiequellen 13, 23, die in diesem Fall als Wellengeneratoren ausgebildet sind, können elektrische Energie aus dem Wechselspannungsnetz 2 aufnehmen und damit die hier nicht dargestellte Schiffswelle 32 antreiben. Auch ein Zuschalten des externen Netzes 5 ist in diesem Betrieb möglich, da die Energiequellen 13, 23 eingeschaltet bleiben können. Diese können auch im Hafen dazu genutzt werden, das Schiff in einer gewünschten Position zu halten. Sobald das externe Netz 5 mit dem redundantem Energieversorgungsnetz verbunden ist, kann auch der Dieselgenerator 30 abgeschaltet werden und die beiden Wellengeneratoren können bei diesem Vorgang und danach im Betrieb bleiben.

Die Anordnung kann um weitere Schalter, insbesondere einem zweiten Netzschalter erweitert werden, um den Energieaustauch zwischen dem Wechselspannungsnetz und einem Energiespeicher, insbesondere dem zweiten Energiespeicher, unterbrechen zu können. Dies kann unter anderem zum Schutz von Komponenten des Energieversorgungsnetzes sinnvoll sein.

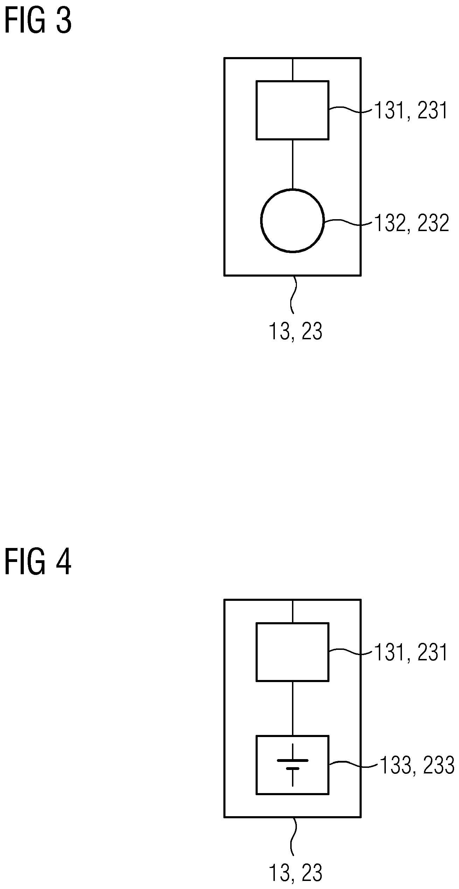

Die FIG 3 zeigt ein Ausführungsbeispiel für eine erste Energiequelle 13 oder zweite Energiequelle 23. Diese weist neben einer elektrischen Maschine 132, 232 einen Steller auf, der es ermöglicht, die Spannung der elektrischen Maschine 132, 232 an den Gleichspannungszwischenkreis 12, 22 anzupassen, d.h. von einer Wechselspannung in eine Gleichspannung umzuwandeln. Die elektrische Maschine 132, 232 kann dabei sowohl generatorisch als auch motorisch betrieben werden. Der generatorische Betrieb tritt beispielsweise dann auf, wenn die elektrische Maschine mit einer Verbrennungsmaschine gekoppelt ist. Ein weiteres Beispiel ist ein Schiff, wobei die elektrische Maschine 132, 232 einen Wellengenerator in einem Schiff darstellt. Dabei entnimmt die elektrische Maschine als Generator mechanische Energie der Antriebswelle des Schiffes und speist diese in das Bordnetz, dem Wechselspannungsnetz 2, ein. Ebenso ist ein leistungsreduzierter Betrieb möglich, bei dem die Antriebsleistung dem Wechselspannungsnetz 2 entnommen wird und über einen oder mehrere Wellengeneratoren der Antriebswelle, d.h. der Schiffswelle 32, und damit der Schiffsschraube 33 des Schiffes zugeführt wird.

Eine weitere Möglichkeit besteht darin, die elektrische Maschine 132, 232 mit einer Schwungmasse zu koppeln und damit einen Schwungmassenspeicher zu betreiben, der sowohl elektrische Energie dem Wechselspannungsnetz 2 entnehmen wie auch dort einspeisen kann.

Die FIG 4 zeigt einen Batteriespeicher als Energiequelle 13, 23. Dabei ist die Batterie 133, 233 über einen Steller 131, 231 mit dem Gleichspannungszwischenkreis 12, 22 verbindbar. Der Steller 133, 233 stellt in diese m Fall einen DC/DC Steller da. Die Batterie kann über das redundante Energieversorgungsnetz 1 über die Verbindung zum externen Netz 5 auf einfache Weise geladen werden. Besonders vorteilhaft ist diese Anwendung für Fahrzeuge, insbesondere Wasserfahrzeuge. Mit der in der Batterie 133, 233 gespeicherten Energie kann dann nicht nur das Bordnetz des Fahrzeugs gespeist werden sondern dieser kann auch die Leistung für den Antrieb entnommen werden. Der Markt verlangt immer häufiger nach elektrisch angetriebenen Fahrzeugen, die auf diese Art einfach über das externe Netz 5 geladen werden können, ohne dass es zu einer Unterbrechung im Bordnetz kommt.

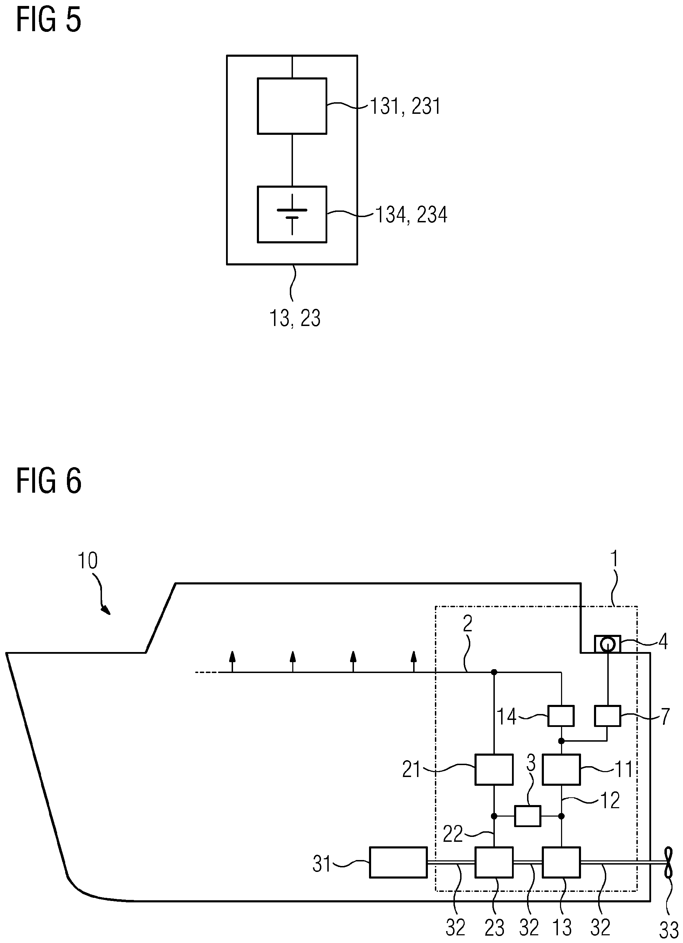

Die FIG 5 zeigt ein vergleichbares Ausführungsbeispiel, das anstelle von Batterien 133, 233 eine Kondensatorbank 134, 234 aufweist. Zur Vermeidung von Wiederholungen wird auf die Beschreibung zur FIG 4 sowie auf die dort eingeführten Bezugszeichen verwiesen. Kondensatoren können im Vergleich zu einer Batterie deutlich höhere elektrische Leistungen zur Verfügung stellen. Diese Anwendung eignet sich im Besonderen für Fahrzeuge, bei denen kurzfristig eine hohe Leistung, beispielsweise für eine Beschleunigung, abgerufen werden muss. Dafür kann die Kondensatorbank 134, 234 genutzt werden, die dann aus dem Wechselspannungsnetz 2 oder beim Halt des Fahrzeugs aus dem externen Netz 5 geladen wird.

Die FIG 6 zeigt ein Wasserfahrzeug 10 mit einer redundanten Energieversorgung 1. Zur Vermeidung von Wiederholungen wird auf die Beschreibung zu den Figuren 1 bis 4 sowie auf die dort eingeführten Bezugszeichen verwiesen. Die Energiequellen 13, 23 sind als Wellengeneratoren ausgebildet, welche der Schiffswelle 32 sowohl elektrische Energie entnehmen können, die von einem Antriebsdiesel 31 eingebracht wird, als auch die Schiffswelle 32 und damit die Schiffsschraube 33 antreiben können und damit die Möglichkeit eröffnen, den Antriebsdiesel 31 zumindest zeitweise, vorzugsweise in einem Hafen, abschalten zu können. Der Anschluss 4 ist geeignet, in einem Hafen mit einem Landnetz als externes Netz 5 verbunden zu werden. Das Zuschalten der Versorgung durch das Landnetz als externes Netz 5 ist der Beschreibung zur FIG 2 zu entnehmen. Die Pfeile an dem Wechselspannungsnetz 2 kennzeichnen die Abgänge zu den einzelnen elektrischen Verbrauchern des Bordnetzes des Schiffes.

Der erste Strang mit erstem Einspeisestromrichter 11, erstem Gleichspannungszwischenkreis 12 und erster Energiequelle 13 ist vorzugsweise zur Sicherstellung eines hohen Maßes an Redundanz auf der einen Seite (Steuerbord bzw. Backbord) des Schiffes angeordnet , während der zweite Strang mit zweitem Einspeisestromrichter 21, zweitem Gleichspannungszwischenkreis 22 und zweiter Energiequelle 23 dann auf der gegenüberliegenden Seite (Backbord bzw. Steuerbord) des Schiffes angeordnet ist.

Zusammenfassend betrifft die Erfindung ein redundantes Energieversorgungsnetz aufweisend einen ersten Einspeisestromrichter mit einem ersten Gleichspannungszwischenkreis und einen zweiten Einspeisestromrichter mit einem zweiten Gleichspannungszwischenkreis, sowie eine erste Energiequelle und eine zweite Energiequelle, ein Wechselspannungsnetz und einen Anschluss für ein externes Netz, wobei der erste und der zweite Einspeisestromrichter jeweils wechselspannungsseitig mit dem Wechselspannungsnetz verbunden sind, wobei die erste Energiequelle mit dem ersten Gleichspannungszwischenkreis verbunden ist und die zweite Energiequelle mit dem zweiten Gleichspannungszwischenkreis verbunden ist. Zur Verbesserung des redundanten Energieversorgungsnetz im Hinblick auf die Einspeisung durch ein externes Netz wird vorgeschlagen, dass zwischen dem ersten Einspeisestromrichter und dem Wechselspannungsnetz ein erster Netzschalter angeordnet ist, wobei der erste Gleichspannungszwischenkreis und der zweite Gleichspannungszwischenkreis mittels eines Zwischenkreisschalters miteinander verbindbar sind, wobei zwischen dem ersten Einspeisestromrichter und dem ersten Netzschalter eine Verbindung zu dem Anschluss für ein externes Netz angeordnet ist. Weiter betrifft die Erfindung ein Wasserfahrzeug mit einem Bordnetz, wobei das Bordnetz als derartiges redundantes Energieversorgungsnetz ausgebildet ist. Ferner betrifft die Erfindung ein Verfahren zum Verbinden eines derartigen redundanten Energieversorgungsnetzes mit einem externen Netz.

## Patentansprüche

1. Redundantes Energieversorgungsnetz (1) aufweisend
- einen ersten Einspeisestromrichter (11) mit einem ersten Gleichspannungszwischenkreis (12) und einen zweiten Einspeisestromrichter (21) mit einem zweiten Gleichspannungszwischenkreis (22),
- eine erste Energiequelle (13) und eine zweite Energiequelle (23),
- ein Wechselspannungsnetz (2) und
- einen Anschluss (4) für ein externes Netz (5),
wobei der erste und der zweite Einspeisestromrichter (11,21) jeweils wechselspannungsseitig mit dem Wechselspannungsnetz (2) verbunden sind, wobei die erste Energiequelle (13) mit dem ersten Gleichspannungszwischenkreis (12) verbunden ist und die zweite Energiequelle (23) mit dem zweiten Gleichspannungszwischenkreis (22) verbunden ist,
**dadurch gekennzeichnet, dass** zwischen dem ersten Einspeisestromrichter (11) und dem Wechselspannungsnetz (2) ein erster Netzschalter (14) angeordnet ist, wobei der erste Gleichspannungszwischenkreis (12) und der zweite Gleichspannungszwischenkreis (22) mittels eines Zwischenkreisschalters (3) miteinander verbindbar sind, wobei zwischen dem ersten Einspeisestromrichter (11) und dem ersten Netzschalter (14) eine Verbindung (6) zu dem Anschluss (4) für ein externes Netz (5) angeordnet ist.

2. Redundantes Energieversorgungsnetz (1) nach Anspruch 1, wobei die erste Energiequelle (13) und die zweite Energiequelle (23) als Wellengenerator ausgebildet sind.

3. Redundantes Energieversorgungsnetz (1) nach Anspruch 1, wobei die erste Energiequelle (13) und/oder die zweite Energiequelle (23) als Energiespeicher, insbesondere als Batterie, ausgebildet ist.

4. Redundantes Energieversorgungsnetz (1) nach einem der Ansprüche 1 bis 3, wobei die Verbindung (6) zu dem Anschluss (4) des externen Netzes (5) einen Verbindungsschalter (7) aufweist.

5. Wasserfahrzeug (10) mit einem Bordnetz, wobei das Bordnetz als redundantes Energieversorgungsnetz (1) nach einem der Ansprüche 1 bis 4 ausgebildet ist.

6. Verfahren zum Verbinden eines redundanten Energieversorgungsnetzes (1) nach einem der Ansprüche 1 bis 5 mit einem externen Netz (5), wobei der Zwischenkreisschalter (3) geschlossen und der erste Netzschalter (14) geöffnet wird, wobei nach dem Öffnen des ersten Netzschalters (14) das externe Netz (5) mit dem ersten Einspeisestromrichter (11) elektrisch leitend verbunden wird.

7. Verfahren nach Anspruch 6, wobei das externe Netz (5) durch Schließen des Verbindungsschalters (7) gemäß Anspruch 4 mit dem ersten Einspeisestromrichter (11) elektrisch leitend verbunden wird.

## Claims

1. Redundant power supply network (1) having
- a first incoming-feed power converter (11) with a first intermediate dc circuit (12) and a second incoming-feed power converter (21) with a second intermediate dc circuit (22),
- a first power source (13) and a second power source (23),
- an alternating voltage network (2) and
- a terminal (4) for an external network (5),
wherein the first and the second incoming-feed power converter (11, 21) are in each case connected on the alternating voltage side with the alternating voltage network (2), wherein the first power source (13) is connected to the first intermediate dc circuit (12) and the second power source (23) is connected to the second intermediate dc circuit (22), **characterised in that** a first mains switch (14) is arranged between the first incoming-feed power converter (11) and the alternating voltage network (2), wherein the first intermediate dc circuit (12) and the second intermediate dc circuit (22) can be connected to one another by means of an intermediate circuit switch (3), wherein a connection (6) to the terminal (4) for an external network (5) is arranged between the first incoming-feed power converter (11) and the first mains switch (14).

2. Redundant power supply network (1) according to claim 1, wherein the first power source (13) and the second power source (23) are embodied as a shaft generator.

3. Redundant power supply network (1) according to claim 1, wherein the first power source (13) and/or the second power source (23) is embodied as a power storage unit, in particular as a battery.

4. Redundant power supply network (1) according to one of claims 1 to 3, wherein the connection (6) to the terminal (4) of the external network (5) has a connection switch (7).

5. Water vehicle (10) with an onboard network, wherein the onboard network is embodied as a redundant power supply network (1) according to one of claims 1 to 4.

6. Method for connecting a redundant power supply network (1) according to one of claims 1 to 5 with an external network (5), wherein the intermediate circuit switch (3) is closed and the first mains switch (14) is opened, wherein after opening the first mains switch (14), the external network (15) is connected in an electrically conducting manner to the first incoming-feed power converter (11).

7. Method according to claim 6, wherein the external network (5) is connected in an electrically conducting manner to the first incoming-feed power converter (11) by closing the connection switch (7) according to claim 4.

## Revendications

1. Réseau (1) redondant d'alimentation en énergie, comportant
- un premier onduleur d'alimentation ayant un premier circuit (12) intermédiaire à tension continue et un deuxième onduleur (21) d'alimentation ayant un deuxième circuit (22) intermédiaire à tension continue,
- une première source (13) d'énergie et une deuxième source (23) d'énergie,
- un réseau (2) à tension alternative et
- une borne (4) pour un réseau (5) extérieur,
dans lequel le premier et le deuxième onduleurs (11, 21) d'alimentation sont reliés chacun, du côté de la tension alternative, au réseau (2) à tension alternative, la première source (13) d'énergie étant reliée au premier circuit (12) intermédiaire à tension continue et la deuxième source (23) d'énergie étant reliée au deuxième circuit (22) intermédiaire à tension continue,
**caractérisé en ce qu'**un premier interrupteur (14) de réseau est monté entre le premier onduleur (11) d'alimentation et le réseau (2) à tension alternative, le premier circuit (12) intermédiaire à tension continue et le deuxième circuit (22) intermédiaire à tension continue pouvant être reliés entre eux au moyen d'un interrupteur (3) de circuit intermédiaire, une liaison (6) à la borne (4) pour un réseau (5) extérieur étant monté entre le premier onduleur (11) d'alimentation et le premier interrupteur (14) de réseau.

2. Réseau (1) redondant d'alimentation en énergie suivant la revendication 1, dans lequel la première source (13) d'énergie et la deuxième source (23) d'énergie sont constituées en alternateur de ligne d'arbre.

3. Réseau (1) redondant d'alimentation en énergie suivant la revendication 1, dans lequel la première source (13) d'énergie et/ou la deuxième source (23) d'énergie est constituée en accumulateur d'énergie, notamment sous la forme d'une batterie.

4. Réseau (1) redondant d'alimentation en énergie suivant l'une des revendications 1 à 3, dans lequel la liaison (6) à la borne (4) du réseau (5) extérieur a un interrupteur (7) de liaison.

5. Véhicule (10) de navigation sur l'eau ayant un réseau de bord, le réseau de bord étant constitué en réseau (1) redondant d'alimentation en énergie suivant l'une des revendications 1 à 4.

6. Procédé de liaison d'un réseau (1) redondant d'alimentation en énergie suivant l'une des revendications 1 à 5 avec un réseau (5) extérieur, l'interrupteur (3) de circuit intermédiaire étant fermé et le premier interrupteur (14) de réseau étant ouvert, dans lequel, après l'ouverture du premier interrupteur (14) de réseau, on relie, d'une manière conductrice de l'électricité, le réseau (5) extérieur au premier onduleur (11) d'alimentation.

7. Procédé suivant la revendication 6, dans lequel on relie, d'une manière conductrice de l'électricité, le réseau (5) extérieur au premier onduleur (11) d'alimentation en fermant l'interrupteur (7) de liaison suivant la revendication 4.
